# EUROPEAN PATENT APPLICATION

(11) **EP 4 726 451 A1**
(43) Date of publication of application: **15.04.2026**
(21) Application number: 25206914.1
(22) Date of filing: 06.10.2025
(51) Int. Cl.: G02B 6/42, G02B 6/43

(54) **A SYSTEM FOR ENABLING SOLDERABLE OPTICAL INTERCONNECT WITH INTEGRATED ASSEMBLY FOR HIGH-SPEED DATA TRANSFER**

(30) Priority: 08.10.2024 IN 202441076356
(71) Applicant: Lightspeed Photonics Pvt. Ltd., Hyderabad Telangana 500081 (IN)
(72) Inventor: Yeluripati, Rohin Kumar, 533255 Ramachandrapuram (IN); Pamidighantam, Ramana Venkata, 500094 Hyderabad (IN); Chandramohan, Raghuveer Mattur, 500094 Hyderabad (IN); Mohammed, Ubed, 506167 Hyderabad (IN); Jose, Jinin K, 500081 Hyderabad (IN); Yeleswarapu, Seetha Mahalakshmi, 500013 Hyderabad (IN); Adepu, Mayuri, 500081 Hyderabad (IN)
(74) Representative: Nirwan, Prajwal

(57) **Abstract**

The present disclosure addresses the problem of large space occupation and high-power consumption in existing pluggable transceiver series by introducing a solderable, compact, high-speed optical interconnect. Current QFSP transceivers occupy excessive space on printed circuit boards, consume more power, and only provide optical connectivity for edge servers. The proposed solution, a modular fiber-based optical interconnect, is designed to bring optics closer to the processor, enabling easier integration on circuit boards and resulting in shorter transmission lines. Falling under the linear pluggable optics category, this technology is gaining traction due to its power savings and enhanced link performance, which are essential for data centres and near-edge cloudlets.

## Description

### DESCRIPTION OF THE INVENTION:

### Technical Field of the Invention

The present invention relates to the field of optical interconnect technology. More specifically, relating to the field of optical interconnect systems for high-speed data transmission.

### Background of the Invention

In present-day optical communication systems, Quad Small Form Pluggable (QSFP) or Quad Small Form Pluggable Double Density (QSFP-DD) transceiver series are being used to enable optical connectivity, thereby enabling existing data demands. However, QSFP pluggable transceivers provide optical connectivity only from edge-to-edge of servers. The existing QSFP pluggable transceivers have limitations in modem data centres and networking environments because of the limited bandwidth for increased server communications due to the evolution of AI/ML. Furthermore, there is an issue related to the space consumed by these structures on the printed circuit board (PCB), i.e., a comparatively larger area is occupied by the existing transceiver module. Existing transceiver modules have high power consumption. Limiting the ability to further develop hardware systems flexibly and efficiently because of the larger size and associated problems of the QSFP transceivers.

Transceivers mounted on the board will prevent the integration of additional components or circuitry on the same board, thereby limiting high-performance designs within the limited area. Most of these transceivers are used only for optical connectivity in edge servers with a maximum of 800G data rate, which limits their use in other applications like SmartNICs, NPO (Near Packaged Optics), and OBO (On-board Optics). Hence, there is a need for a compact, solderable, low-power-consuming,

optical interconnect that enhances overall system performance and design flexibility for application in advanced server networking and computing systems.

### Object of the invention

The principal objective of the invention is to design modular and solderable optical interconnect modules.

Another objective of the invention is to design higher bandwidth optical interconnect modules.

Another objective of the invention is to reduce form-factor, thereby providing to additional space for placing other components.

Another objective of the invention is to design an optical interconnect that reduces the power consumption for operation.

Another objective of the invention is to minimize the physical footprint on the printed circuit boards, thereby reducing the total cost associated with implementing and operating the transceiver modules.

### Summary of the Invention

To the enablement of the present disclosure and related ends, at least one aspect comprises the feature herein after completely described and particularly and/or specifically pointed out in the specification in the section of claims. The following drawings and descriptions set forth in detail enable certain example features of at least one aspect. The described features are indicative. However, a there are many ways in which the following principles of various aspects may be employed, and this description is intended to include all such aspects and their equivalents.

In the present disclosure, the problem of large space occupation and high-power consumption of existing pluggable transceiver series on board is solved by designing a solderable, compact, high-speed optical interconnect. Existing QFSP pluggable transceivers occupy too much space on the printed circuit board, have higher power consumption and provide optical connectivity for only edge servers. The replacement technology that is being developed, i.e. a modular fiber-based optical interconnect, is a solderable, compact, and high-speed optical interconnect that is designed to bring optics close to a processor. That may be easily integrated on printed circuit boards, resulting in shorter transmission lines to the processor. Modular fiber-based optical interconnects come under the linear pluggable optics category that has gained momentum in recent years as the product segment is known for high power savings and link performance, which is critical for data centers and near-edge cloudlets.

This summary provided herein is to introduce a section of concepts in a simple and clear form, which are further described in the Detailed Description. This summary provided herein is not intended to particularly identify key features or essential features of the claimed invention or subject matter, nor is it intended to be used as support or as an aid in determining the scope of the claimed subject matter.

The above summary is descriptive and exemplary only and is not intended to be restricted in any way. In addition to the descriptive aspects, embodiments, and features described in the above summary, further features and embodiments will become apparent by reference to the accompanied drawings and the following detailed description.

### Brief Description of Drawings

The foregoing and other features of the embodiments will become more apparent from the following detailed description of the embodiments when read in conjunction with the accompanying drawings. In the drawings, like reference numerals refer to like elements.

In the following description, for explanation, numerous specific details are set forth to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form to avoid unnecessary obscuring the embodiment of the invention.
**FIGs.1A-1C** illustrate diagrams for representing the modular optical interconnect system **100,** according to one example of the embodiment.
**FIGs.2A-2C** illustrate diagrams for representing Of an Integrated dual lens array and a prism which is critical for OSA and a cross-section of the Optical Sub Assembly unit (OSA) for both transmitter and receiver, according to one example of the embodiment.
**FIGs.3A-3C** illustrate diagrams for representing the assembly process and a simplified schematic diagram of a modular optical interconnect system **100,** according to one example of the embodiment.
**FIGs.4A-4C** illustrate graphs for representing coupling efficiency including tolerances using optics simulation, according to one embodiment example.

**TABLEs.1-4** represent a performance and latency comparison, form factor and integration comparison, power efficiency and thermal management, and optical and electrical specifications comparison, according to one embodiment example.

### Detailed Description of the Invention

Reference will now be made in detail to the description of the present subject matter, one or more examples of which are shown in the figures. Each example is provided to explain the subject matter and not a limitation. Various changes and modifications obvious to one skilled in the art to which the invention pertains are deemed to be within the spirit, scope, and contemplation of the invention.

The invention introduces a compact multi-channel optical transmitter receiver system designed for high-speed data transfer in modem networking environments. The system integrates both transmitting and receiving engines, utilizing VCSELS and photodetectors respectively to enable high-quality optical communication.

This solution is built using a solderable optical interconnect that provides modular fiber-based architecture. It supports 12 transmission channels and 12 reception channels, which is crucial for efficient data exchange in high-performance environments.

The multi-channel optical Transmitter - Receiver is integrated on a Customized LTCC (Low Temperature Co-fired Ceramics), ensuring low parasitic inductance and providing optimized thermal management. The central thermal pad minimizes heat buildup, which is essential for the system's long-term stability during continuous, high-speed operation.

By using compact fiber-optic modules, such as fiber ferrules and Integrated lens, the system can be easily integrated into existing infrastructure. This ensures seamless compatibility with modem network systems and contributes to its scalability.

The surface-mount Transmitter - Receiver design allows for efficient PCB integration, utilizing standard SMT processes. This eliminates the need for traditional, bulky pluggable transceivers, significantly reducing the physical footprint on the PCB.

With its low power consumption design and space-saving form factor, the system offers a next-generation solution for data center connectivity and advanced server networking. It meets the demanding needs for bandwidth, thermal efficiency, and reliability, making it an ideal choice for high-performance computing systems.

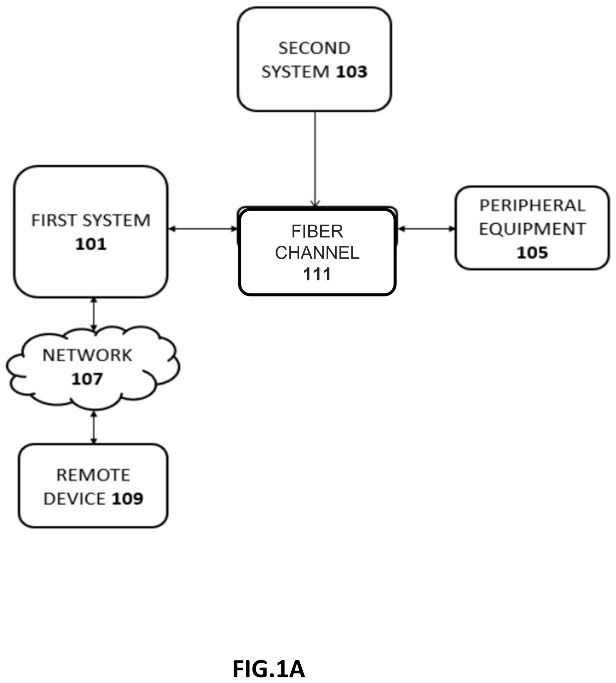

**FIGs.1A-1C** illustrate diagrams for representing the optical sub-assembly unit (OSA) for the transmitter and receiver, according to one example of the embodiment.

**FIG.1A** illustrates a high-speed data transfer system using fiber channel **111** for communication between two systems and peripheral equipment. The first system **101** represents the data source, which connects to the fiber channel, transmitting data to the second system **103.** The second system receives and processes the data, which may then interact with the peripheral equipment **105.** The fiber channel **111** serves as the core transmission medium, enabling high-speed data flow between these systems, with the invention aiming to optimize this channel through solderable optical interconnects that provide space-saving, power-efficient, and reliable performance for modern data centres and networking applications.

Additionally, the diagram shows network **107** connecting the first system **101** to a remote device **109,** which can be a user or a remote access point. The remote device interacts with the first system via the network, enabling remote control or data requests. This structure highlights how the invention enables modular and compact optical interconnects that bring optical components closer to processors, improving integration, reducing power consumption, and facilitating high-speed data transfer in systems where space, power, and performance are critical factors.

In an example embodiment, peripheral equipment **105** may receive and/or send data through the fiber channel **111** and may be connected to the network **107** via a first system **101.** In some other example embodiments, the peripheral equipment **105** may be connected to the second system **103** via the fiber channel **111.** In some example embodiments, considering second system **103** may also be connected with another remote device via another network. In some other example embodiments, the first system **101** and the second system **101** may also be connected via a network. In some example embodiments, the input/output ports (I/O ports) on the computer systems **(101,103)** enable communication via the fiber channel **111.** Peripheral devices may include but not limited to keyboard, mouse, touch screen, pen tablet, joystick, MIDI keyboard, scanner, digital, camera, video camera, microphone monitor, projector, TV screen, printer, plotter, speakers, external hard drives, media card readers, digital, camcorders, digital mixers, MIDI equipment and the likes. In some example embodiments, any of or both of the computer systems **(101/103)** may be connected with the remote device **109** via the network **107.** The network **107** may include the Internet or any other network capable of communicating data between devices. Suitable networks may comprise or interface with any one or more for instance, a local intranet, a LAN (Local Area Network), a MAN (Metropolitan Area Network), a WAN (Wide Area Network), a PAN (Personal Area Network), a virtual private network (VPN), a MAN (Metropolitan Area Network), a frame relay connection, a storage area network (SAN), an Advanced Intelligent Network (AIN) connection, a synchronous optical network (SONET) connection, a digital E1, E3, T1 or T3 line, DSL (Digital Subscriber Line) connection, Digital Data Service (DDS) connection, an ISDN (Integrated Services Digital Network) line, an Ethernet connection, a dial-up port, for example such as a V.90, V.34 or V.34b is analog modem connection, an ATM (Asynchronous Transfer Mode) connection, a cable modem or CDDI (Copper Distributed Data Interface) connection or an FDDI (Fiber Distributed Data Interface). Furthermore, communications may also comprise links to any of a variety of wireless networks, comprising GPRS (General Packet Radio Service), WAP (Wireless Application Protocol), GSM (Global System for Mobile Communication), or CDMA (Code Division Multiple Access), TDMA (Time Division Multiple Access), cellular phone networks, CDPD (cellular digital packet data), RIM (Research in Motion, Limited), GPS (Global Positioning System), duplex paging network, Bluetooth radio, or an IEEE 802.11-based radio frequency network. The network **107** can further comprise or interface with any one or more of an RS-232 serial connection, a SCSI (Small Computer Systems Interface) connection, a Fiber Channel connection, an IEEE-1394 (Firewire) connection, an IrDA (infrared) port, a Universal Serial Bus (USB) connection or other connections which may be wired or wireless, and comprise digital or analog interface or connection, with mesh or Digi networking.

In another example, hardware implementations which are specifically dedicated, such as application-specific integrated circuits, programmable logic arrays, and many other hardware devices, can be built to implement numerous methods described hereafter. Applications may also include the apparatus of various embodiments and can broadly include a variety of computer systems and electronic boards.

One example embodiment described hereafter may carry out functions using more than two specific devices with related control or interconnected hardware modules and data signals which can be transmitted and received between and through any of the modules, or as portions of an application-specific integrated circuit accordingly,

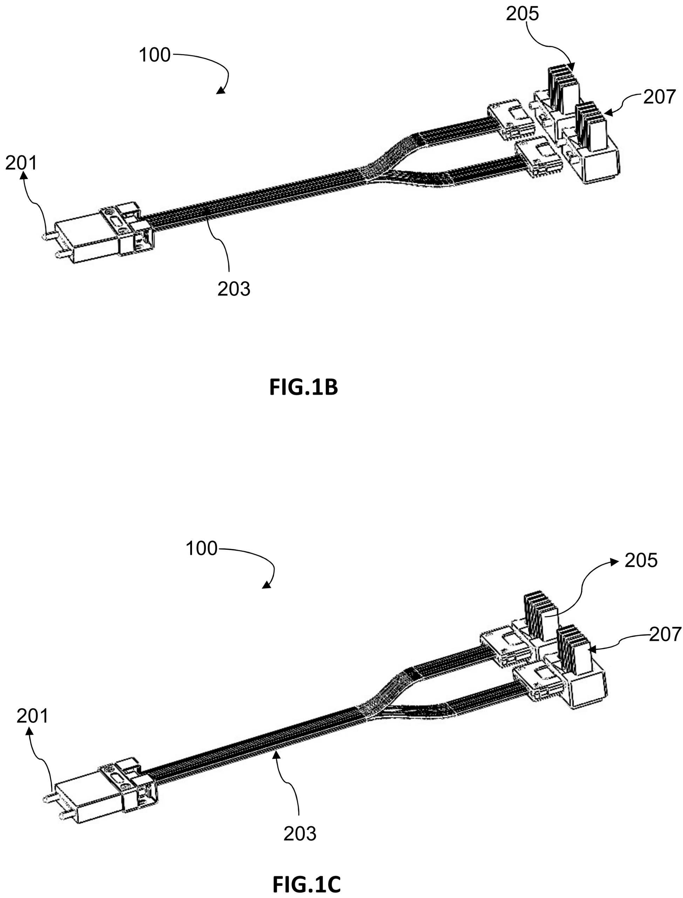

The present system comprises of firmware, software, and hardware for implementations. In an example embodiment, the remote device **109** may be communicated coupling to the system **101** and/or **103** via the network **107.** In one example embodiment shown in **FIG.1****,** the first system **101** is shown connected with the remote device **109** via the network **107.** In some example embodiments, the remote devices are peripheral devices **109** which may include, but are not limited to, mobile phones, laptops, desktops and the likes. In some example embodiments, the remote device **109** may receive a plurality of notifications based on one or more functions associated with the system **(101** and/or **103).** In some example embodiments, the peripheral remote device may be any circuitry to determine data integrity associated with the received optical signals. Throughout the disclosure. A system and optics-based compute system may interchangeably be used.

An optical interconnect unit **200** design is a core aspect of Opto-Electronic products, which includes a 2 × 12 channel fiber array with connector **201,** a 2 × 12 channel fiber array for transmitter and receiver **203,** one end gets connected to the legacy compatible MTP or MPO connectors and another to the ferrules interfaced with Integrated lens, will have a provision to attach standard ferrules in a passive manner. The length of the fiber array can be modified to the specific needs of the application which makes the design very flexible. The heatsink is housed inside the integrated lens based optical interconnect. OSA comprises both transmitter **205** and receiver **207,** where 12-channel fiber arrays from them get connected to the standard MTP or MPO connector. Wherein a first end of the fiber array unit **203** is connected to a transmitter module **205** and a receiver module **207,** wherein the transmitter module **205,** positioned at the transmitting end of the fiber array unit **203,** comprises a plurality of optical engines for generating a plurality of optical signals. Wherein light is collimated via a primary lens **303,** deflected by a surface of a reflecting prism **300,** and directed toward a fiber core via a secondary lens **301.** The secondary lens within the fiber array unit **203** configured to collimate beam from the reflecting prism **300** and couple a plurality of optical singles with fiber array unit **203** for transmitting module **205,** similarly in the receiver module **207,** the secondary lens **301** will collimate beam from reflecting prism 300, which in turn gets deflected to active area of the photodetector array **305.** The optical interconnect unit **200,** integrated with the fiber array unit **203** or closely coupled with the modular optical interconnect system's processor, is configured to handle a conversion of the plurality of electrical signals to the plurality of optical signals and the reverse process. Wherein the transmitter module **205** and receiver module **207** are both positioned within the fiber array unit **203,** with the fiber connector **201** and ferrules providing secure physical coupling and alignment for the transmission and reception of the plurality of optical signals between the transmitter module **205** and receiver module **207.** Integrated lens will have a provision to attached standard Ferrules in a passive manner. The fiber array unit **203** includes a 2 × 12 channel fiber array, ensuring precise alignment of the 24 individual fibers for efficient optical signal transmission between the transmitter module **205** and receiver module **207,** enabling high-density, high-performance optical communication. The fiber array unit **203** includes 12 fibers for transmitter module **205** and 12 fibers for receiver module **207,** thereby enabling high-density, high-performance optical communication.

In some example embodiments, the optical interconnect unit **200** is designed to handle the conversion of electrical signals to optical signals and the reverse process. The OSA unit is integrated directly onto the same substrate or closely coupled with the processor. The OSA unit may include one or more, but not limited to laser diodes, photodiodes, and lenses. Wherein, the laser diodes are responsible for converting electrical data signals into optical signals. The photodetector array is responsible for converting optical signals back into electrical signals. The Integrated lens is responsible for guiding and focusing light from the laser diode into the optical fiber and from the optical fiber onto the photodetector array. The Integrated lens is designed in a compact and efficient manner, thereby reducing loss and enhancing the overall performance of the optical interconnect. Wherein the optical interconnect unit **200** handles the conversion of the plurality of electrical signals to the plurality of optical signals and the reverse process, comprising one or more laser diodes, photodetector array, Integrated lens which guide and focus light from the laser diode into the optical fiber and from the optical fiber onto the photodetector array.

In some example embodiments, the optical interconnect unit **200,** includes a 2 × 12 channel fiber array with a connector **201.** It is used to achieve precise alignment between each of the 24 individual fibers in the array and the corresponding fiber or optical elements on the other side of the connection. In addition to alignment, the connector provides a stable and secure physical interface between the fiber array and the next component in the optical path, such as a transceiver, an optical switch, or another fiber array. Secure coupling is essential to prevent any disconnections or physical shifts that could affect the transmission of optical signals.

In some example embodiments, the 2 × 12 channel fiber array for transmitter and receiver **203,** enables high-density, high-performance optical communication. Its ability to handle large volumes of data in a compact, efficient manner, while maintaining signal integrity and simplifying system integration, makes it a vital element in optical systems. It ensures that all optical channels are closely aligned and positioned within a single structure, which enhances signal integrity, precise alignment of the fibers within the array minimizes the signal loss and allows for more components to be integrated into a smaller footprint without compromising performance. The fiber array unit **203** includes 12 fibers for transmitter module **205** and 12 fibers for receiver module **207,** thereby enabling high-density, high-performance optical communication.

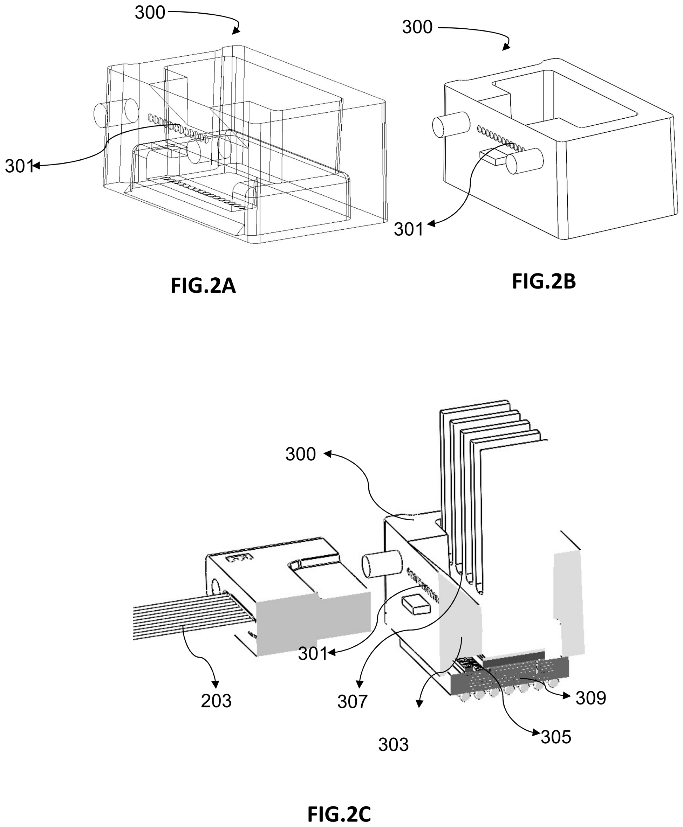

**FIGs.2A-2C** illustrate diagrams for representing a reflecting prism and a cross-section of the Optical Sub Assembly unit (OSA) for both transmitter and receiver, according to one example of the embodiment. Optical communication between the modular fiber-based optical interconnect to external devices is enabled by the Fiber Array Unit. The transmitter has a Vertical-Cavity Surface-Emitting Laser-based (VCSEL) light source **305,** light collimator via primary lens **303,** deflects at 45 45-degree surface of the reflecting prism **300,** and reaches the fiber core via secondary lens **301.** The secondary lens **301** within the fiber array unit **203** helps maintain light intensity with negligible loss, ensuring efficient light transmission from the transmitter module **205** to the receiver module **207** via the fiber array unit **203.**

Both the 45-degree surface and the secondary lens are part of Fiber Array Unit **203.** The receiver has a photodetector array; light from the fiber core passes via secondary lens **301,** gets deflected by the 45-degree surface of reflecting prism **300,** and goes to the photodetector array via primary lens **303.** Secondary lens **301** in the ferrule helps maintain light intensity with negligible loss and transmits light into the fiber. A Low-Temperature Co-Fired Ceramics Substrates (LTCC) **309,** included at the base portion of the Optical interconnect that is soldered on the multi-layer substrate **401.** It is used to provide a stable, thermally efficient, and highly precise foundation for the integration of optical and electronic components. **307** represents the cross-section of the OSA for both the transmitter and receiver. A low-temperature co-fired ceramics substrate **309** at the base of the modular optical interconnect system **100,** soldered onto a multi-layer substrate **401,** provides a stable, thermally efficient foundation for integrating a plurality of optical and electronic components. Wherein the reflecting prism **300** is positioned within the fiber's ferrule **203,** deflecting the light from the transmitter module **205** at a 45-degree angle, guiding the collimated light into the fiber core with minimal loss.

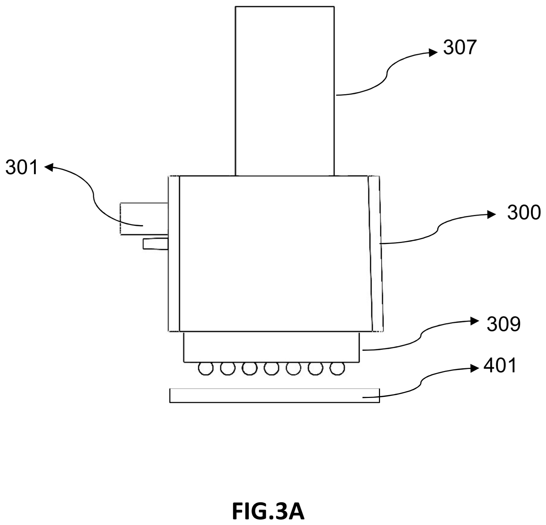

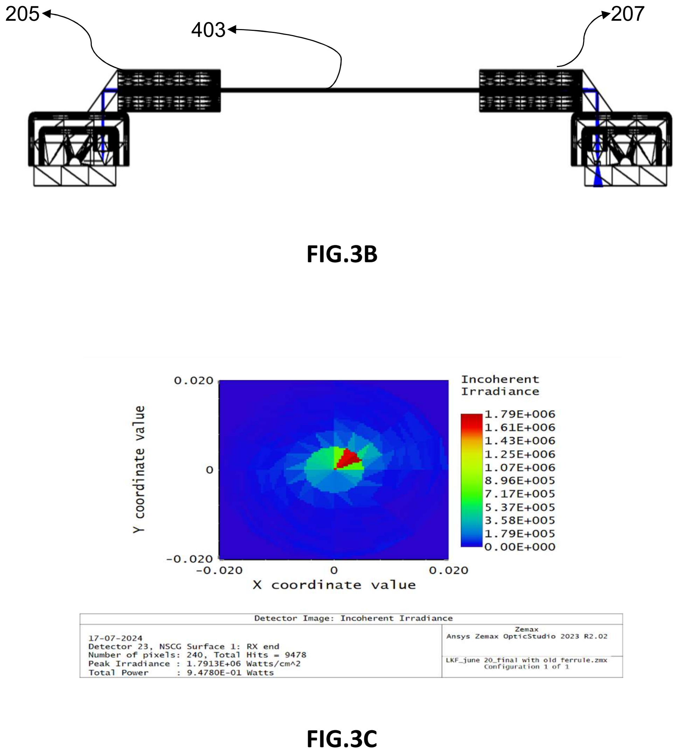

**FIG.3A-3B** illustrates diagrams for representing the assembly process and a simplified schematic diagram of an optical interconnect system, according to one example of the embodiment. **FIG.3A** diagram that illustrates a modular fiber-based optical interconnect with a heatsink that is soldered on the multi-layer substrate **401.** Optical interconnect will be fixed on the application PCB through reflow soldering. The fiber array's ferrule terminal will be inserted into the integrated lens of the transmitter and receiver, respectively. **FIG.3B** diagram illustrates a simplified schematic representation of the optical interconnect system. Fiber Array Unit **203** includes an organized array of optical fibers. An optical fiber **403** is used to connect the ferrule **203** of both the transmitter **205** and receiver **207,** respectively. The transmitter module includes a laser, diode, or similar light source that converts electrical signals into optical signals, and integrated lens cap When the light is focused on the optical components, such as lenses, reflecting prisms, or mirrors it helps to collimate the light into the optical fiber connecting the transmitter module **205** and the receiver module **207.** The Receiver module **207,** includes a photodetector array or similar devices that convert incoming optical signals from the transmitter module into an electric signal. The electrical signals may be subjected to amplification and converted to a digital format and processed. Then they may be used for extracting transmitted data before going to the destination in the communication system. The receiver module **207,** positioned at a receiver end of the fiber array unit **203,** comprising a photodetector array **305** configured to receive the plurality of optical signals from the fiber array unit **203** via an optical fiber connector **201** positioned at the second end of the fiber array unit **203,** and convert the plurality of optical signals into electrical signals. The modular heatsink **307** configured to extract heat from transmitting module **205** and receiving module **207,** integrated into the modular optical interconnect system **100** for heat dissipation during high-speed data transfer.

**FIG.3C** illustrates a graph for representing coupling efficiency including tolerances using optics simulation, according to one example of the embodiment. The graph represented in the figure includes the X and Y axes, and displays the spatial coordinates on the detector plane, measured in centimeters, which has a range from -0.020 to 0.020 on both the X and Y axes. The center part of the graph represents how the irradiance or intensity of light is distributed across the detector surface. The color gradient, ranging from blue to red, corresponds to the irradiance levels, with red indicating the highest irradiance, i.e. around 1.79 × 10⁶ *W*/*cm*²*,* and blue indicating the lowest.

The measurements are taken at a specific surface on the receiver end of the optical system. The simulation uses 240 pixels to represent the detector plane, with a total of 9,478 hits recorded, indicating the number of rays or photons that impacted the detector during the simulation. The maximum irradiance is recorded at the peak of the graph 1.7913 × 10⁶ *W*/*cm*², which is indicated by the red area in the graph. Overall power detected across the entire surface 9.4780 × 10⁻¹ *W* indicates that the optical system is effectively focusing light into a small central region of the detector. It may be used in applications that require precise light coupling i,e, optical communication systems.

Furthermore, the OSA supports 12 channels, each capable of handling 28 Gbps, resulting in a total data rate of 336 Gbps. The high data rate makes the OSA suitable for transferring large amounts of data in a short period of time. Hence, high optical coupling efficiency is achieved which means that data can be transmitted with minimal loss.

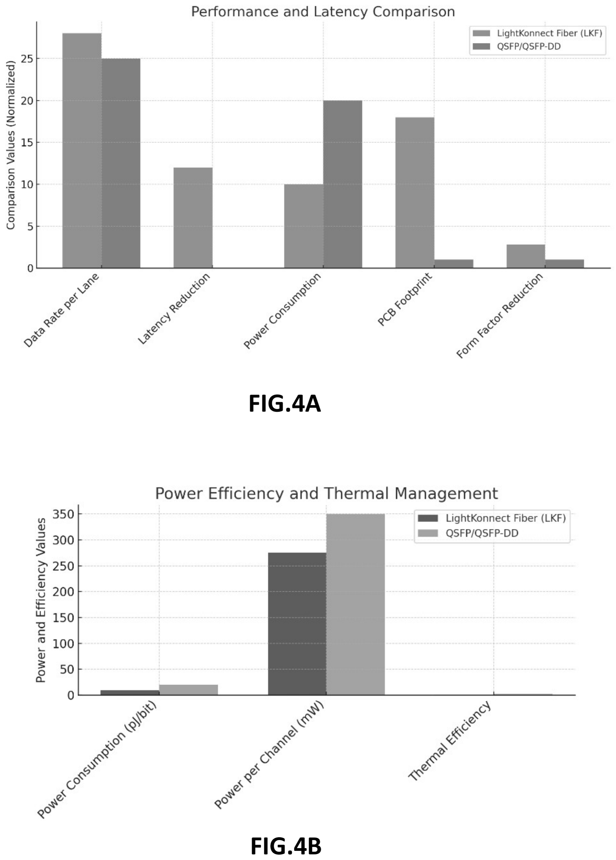

**FIGs.4A-4C** illustrate graphs for representing coupling efficiency including tolerances using optics simulation, according to one embodiment example.

**FIG.4A** represents the performance and latency comparison chart that emphasizes the benefits of LightKonnect Fiber (LKF) compared to QSFP/QSFP-DD across multiple important performance metrics. LKF greatly surpasses QSFP/QSFP-DD regarding Data Rate per Lane, attaining an elevated normalized value, which signifies quicker data transfer rates. Moreover, LKF offers significant Latency Reduction, demonstrating superior performance regarding reduced delay. In the analysis of Power Consumption, LKF shows much higher efficiency, using considerably less energy. The PCB Footprint and Form Factor Reduction represent important advantages of LKF, featuring a significantly smaller footprint that allows for improved space usage and integration.

**FIG.4B** represents the graph of power efficiency and thermal management, demonstrating LKF's superiority regarding energy usage and thermal efficiency. LKF consumes significantly less power, exhibiting a Power Consumption (pJ/bit) that is considerably lower than that of QSFP/QSFP-DD, which suggests a more energy-efficient design. Moreover, LKF requires lower power per channel (275mW at 28 Gbps) when compared to the increased values linked to QSFP/QSFP-DD. The thermal management of LKF is significantly improved, producing less heat and thereby decreasing the necessity for cooling while enhancing overall system efficiency.

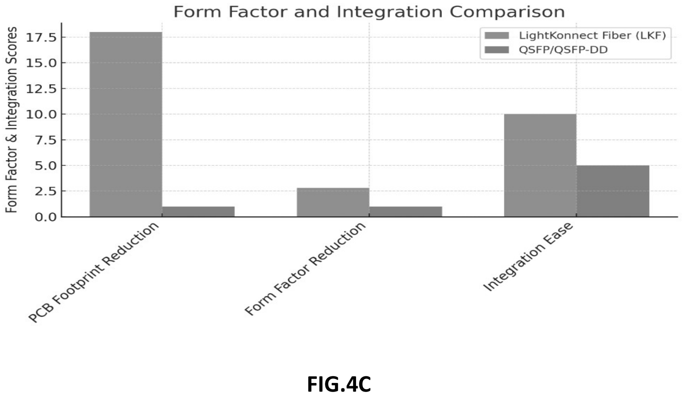

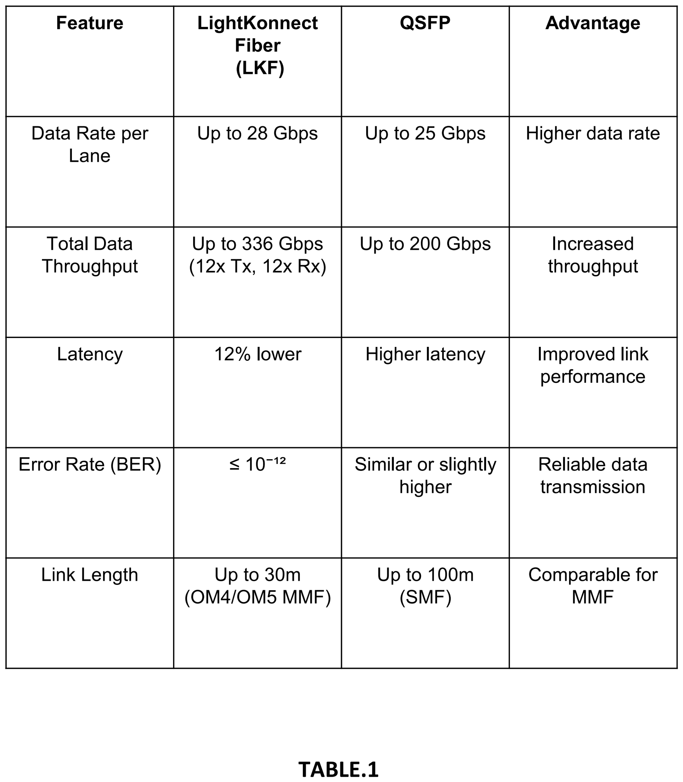

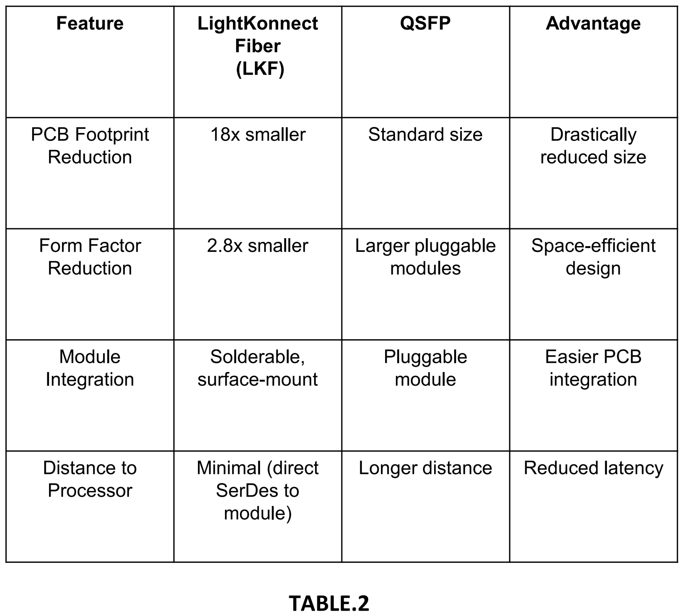

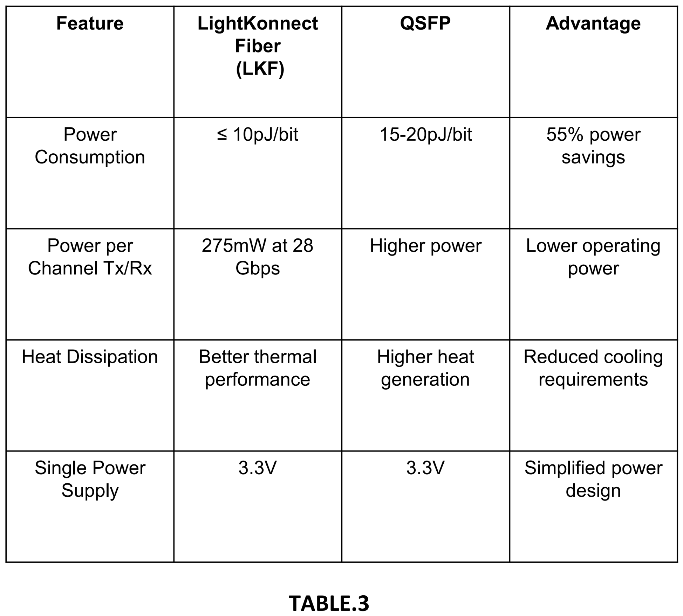

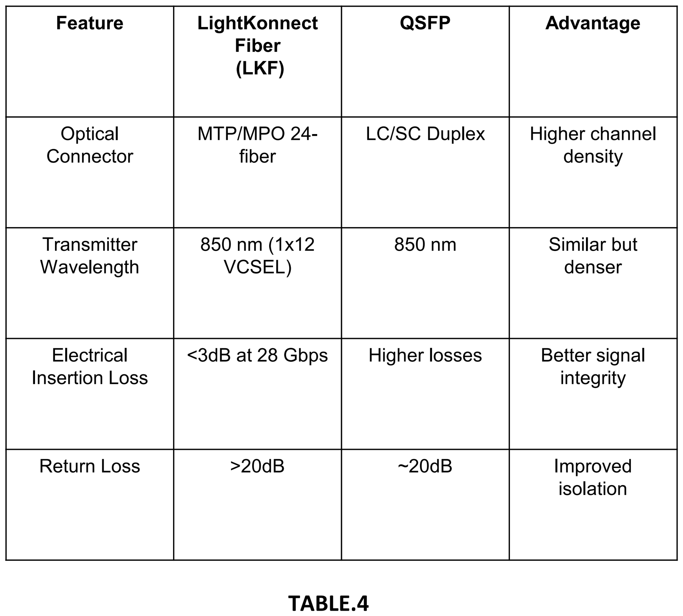

**FIG.4C** represents a form factor and integration comparison graph that distinctly shows that LKF provides a substantial decrease in PCB Footprint, measuring 17.5x smaller than QSFP/QSFP-DD, emphasizing its small size. The reduction in form factor is even more significant in LKF, making it a superb option for applications with space limitations. Additionally, LKF provides significantly easier integration due to its solderable, surface-mount design that streamlines the PCB integration process, while QSFP/QSFP-DD necessitates more intricate handling and larger module sizes for integration.

**TABLEs.1-4** represent a performance and latency comparison, form factor and integration comparison, power efficiency and thermal management, and optical and electrical specifications comparison, according to one embodiment example.

**TABLE.1** evaluates the performance of a compact multi-channel optical transceiver system and QSFP/QSFP-DD based on five essential characteristics. LKF offers a greater Data Rate per Lane, providing 28 Gbps per lane, whereas QSFP/QSFP-DD accommodates up to 25 Gbps. This leads to LKF achieving a greater data transfer rate. Moreover, LKF provides a Total Data Throughput of 336 Gbps (12x Tx, 12x Rx), surpassing QSFP/QSFP-DD's 200 Gbps. LKF also attains 12% reduced latency, enhancing overall link performance in comparison to QSFP/QSFP-DD, which exhibits greater latency. The Bit Error Rate (BER) for LKF is ≤ 10⁻¹², rendering it more dependable for data transmission compared to QSFP/QSFP-DD, which has a comparable or marginally higher error rate. Regarding Link Length, LKF allows for a maximum of 50m with OM3/OM4/OM5 MMF, whereas QSFP/QSFP-DD can reach up to 100m with SMF, which makes LKF more appropriate for short-distance uses.

**TABLE.2** contrasts the form factor and integration features of LKF and QSFP/QSFP-DD. LKF has a significantly smaller PCB footprint, measuring 18 times smaller than QSFP/QSFP-DD, leading to a greatly minimized size. The form factor reduction for LKF is 2.8 times smaller, enhancing its space efficiency when compared to the larger pluggable modules of QSFP/QSFP-DD. Regarding Module Integration, LKF is both solderable and surface-mountable, facilitating simpler and more efficient integration than the pluggable QSFP/QSFP-DD modules that necessitate more space and intricate integration. LKF maintains a short distance from the Processor because of its direct SerDes-to-module link, leading to lower latency, while QSFP/QSFP-DD has an extended distance, causing increased latency.

**TABLE.3** highlights the power efficiency and thermal management features of LKF and QSFP/QSFP-DD. LKF is extremely efficient in its power usage, consuming just ≤ 10pJ/bit, while QSFP/QSFP-DD operates at 15-20pJ/bit, leading up to 55% reduction in power. Moreover, LKF uses 275mW at 28 Gbps for each channel, making it more power-efficient than the greater power usage of QSFP/QSFP-DD. LKF additionally provides improved thermal efficiency, releasing less heat, which in turn lowers the cooling needs for systems utilizing LKF. Both technologies utilize a 3.3V power supply, streamlining the power design in each instance, although LKF offers a more effective thermal management approach.

**TABLE.4** contrasts the optical and electrical characteristics of LKF and QSFP/QSFP-DD. LKF utilizes a 24-fiber optical connector, MTP/MPO, which provides greater channel density compared to the LC/SC Duplex connectors employed by QSFP/QSFP-DD. Both technologies operate at a transmitter wavelength of 850 nm, but LKF employs a 1x12 VCSEL, enabling more compact channel integration. LKF attains less than 3dB of electrical insertion loss at 28 Gbps, ensuring superior signal integrity in contrast to the greater losses linked with QSFP/QSFP-DD. Finally, LKF exhibits a return loss exceeding 20 db, ensuring improved isolation, while QSFP/QSFP-DD has a return loss of around ~20 db.

According to some example embodiments, in contemporary data centers, especially those facilitating High-Performance Computing (HPC) tasks such as AI model training, machine learning, or big data analysis, the demand for high throughput, minimal latency, and energy efficiency is essential. LKF can facilitate the connection of servers, storage systems, and networking devices with improved data rates (up to 28 Gbps for each lane) and overall throughput (336 Gbps), lowering latency and boosting overall data processing speeds. Its compact structure (18x smaller PCB footprint) enables higher density in networking devices, maximizing data center space and lowering operational expenses tied to cooling, which makes it perfect for high-density, energy-efficient settings.

According to some example embodiments, in edge computing, where real-time data processing needs to occur closer to the source (such as IOT devices or smart sensors), LKF can serve as the interconnect technology between edge devices and processing units. The low latency and high data throughput capabilities of LKF enable faster decision-making and data analysis, critical for applications such as autonomous vehicles, smart cities, or industrial automation. Additionally, the solderable surface-mount design allows for easier integration into small-scale, embedded systems, ideal for compact edge devices that need to handle high-bandwidth data streams efficiently.

According to some example embodiments, for telecommunications companies or firms dealing with optical networks, LKF offers an excellent solution for fast, low-latency links among network switches, routers, and transmission devices. The MTP/MPO 24-fiber optical connector employed by LKF offers increased channel density, accommodating a total throughput of up to 336 Gbps. LKF is ideal for uses like fiber-optic backhaul, 5G infrastructure, and optical transport networks that demand long-range communication (up to 30m with MMF) alongside low power consumption for energy efficiency. Through the implementation of LKF, telecom providers can decrease network congestion, enhance service quality, and minimize operational expenses.

According to some example embodiments, the optical interconnect system is in high-speed data centers. With the exponential growth of data and demand for faster and more efficient data transfer, optical interconnects offer a significant advantage by supporting high-bandwidth communication with minimal latency. The system's ability to handle 12 optical channels, each capable of 28 Gbps, will enable seamless communication across large-scale data centers, ensuring high throughput and low signal loss. This is crucial for applications such as cloud computing, data storage, and real-time processing.

According to some example embodiments, the optical interconnect system can be integrated into telecommunications infrastructure, especially in the context of 5G networks. Optical interconnects are expected to play a vital role in next-generation mobile networks by facilitating high-speed data transmission between base stations, fiber optic networks, and network core systems. The system's high data rate capabilities, such as 336 Gbps total throughput, are essential for supporting the bandwidth-heavy demands of 5G technologies, including ultra-reliable low-latency communication (URLLC) and enhanced mobile broadband (eMBB).

According to some example embodiments, optical computing and quantum technologies. As these technologies evolve, there is an increasing need for optical interconnects that can handle the transfer of quantum states and optical signals between computing nodes at ultra-high speeds. The system's modular and compact design, combined with minimal signal loss, makes it ideal for future applications in quantum communication networks, quantum computing, and optical computing architectures, which require extremely low-latency and high-bandwidth connections.

According to some example embodiments, in the domain of autonomous vehicles and Internet of Things (IoT) networks, the optical interconnect system can be used to enable high-speed, real-time communication between devices and sensors. For example, autonomous vehicles require constant data exchange between sensors, cameras, and processing units to make real-time decisions. The high optical coupling efficiency and minimal loss of this system will ensure reliable communication in these fast-moving applications, supporting tasks such as real-time image processing, sensor fusion, and vehicle-to-vehicle (V2V) communication.

According to some example embodiments, the optical interconnect system is also well-suited for use in aerospace and defense systems, where robust and high-performance communication is critical. The system's modular design and compact size make it ideal for use in satellite communications, radar systems, and military data networks. The ability to transmit data at high speeds with low signal degradation is essential for the operation of mission-critical systems that rely on continuous data flow, such as real-time surveillance, communications, and tactical operations.

In another embodiment of the invention, the modular optical interconnect system **100** comprises transmitter **205** and receiver **207** modules implemented in a surface-mount land grid array (LGA) package to enable direct soldering on printed circuit boards, thereby ensuring compact integration and mechanical stability. Each transmitter channel of the 1×12 VCSEL array is provided with an individual two-wire I²C programmable interface, allowing fine-tuned per-channel control of operating parameters. The receiver module **207** is configured to achieve a bit error rate better than 5E-5 at 28 Gbps without requiring clock and data recovery, digital signal processing, or forward error correction, thereby ensuring reliable high-speed optical data transfer while maintaining a simple system design.

According to an example embodiment of the invention, the modular optical interconnect system **100** comprises a fiber array unit **203** connected to a transmitter module **205** and a receiver module **207.** The transmitter module **205** includes a 1×12 VCSEL array operating at 850 nm with a wavelength range of 840-860 nm, capable of delivering up to 28 Gbps per channel. The receiver module **207** comprises a 1×12 photodiode array with an electrical input insertion loss of less than 3 dB at 28 Gbps. Both transmitter and receiver modules operate at a single 3.3 V supply voltage with 100 Ω ±10% differential impedance, and provide an aggregate data throughput of 336 Gbps.

According to another example embodiment of the invention, the fiber array unit **203** incorporates 12 fibers for the transmitter module **205** and 12 fibers for the receiver module **207,** arranged through a 24-fiber MTP/MPO connector to ensure secure physical alignment. The optical signals generated by the transmitter module **205** are collimated via a primary lens **303,** deflected by a reflecting prism **300** at a 45° angle, and guided through a secondary lens **301** into the fiber core. The receiver module **207** converts incoming optical signals into electrical signals with a receiver output swing adjustable between 320-800 mV on a 1.7 V common-mode voltage, tunable via a two-wire I²C programmable interface.

According to a further embodiment of the invention, the modular optical interconnect system **100** integrates a low-temperature co-fired ceramic substrate **309** soldered to a multi-layer substrate **401** for thermal stability, and a modular heatsink **307** for heat dissipation. The receiver module **207** is configured with independent Received Signal Strength Indicator (RSSI) monitoring and I²C programmability for adjusting output swing size, applying pre-emphasis, and modifying signal detection thresholds. Additionally, the system achieves adjacent channel isolation better than 20 dB at 28 Gbps, thereby enabling high-density optical communication with minimal cross-talk.

The many features and advantages of the invention are apparent from the detailed specification, and thus, the claims intend to cover all such features and advantages of the invention that fall within the true spirit and scope of the invention. Further, since numerous modifications and variations will readily occur to those skilled in the art, it is not desired to limit the invention to the exact construction and operation illustrated and described, and accordingly, all suitable modifications and equivalents may be resorted to, falling within the scope of the invention.

## Claims

1. A modular optical interconnect system **100,** comprising:
a fiber array unit **203,** wherein a first end of the fiber array unit **203** is connected to a transmitter module **205** and a receiver module **207,** wherein the transmitter module **205,** positioned at a transmitting end of the fiber array unit **203,** comprises a plurality of optical engines for generating a plurality of optical signals;
wherein the plurality of optical signals are collimated via a primary lens **303,** deflected by a surface of a reflecting prism **300,** and directed toward a fiber core via a secondary lens **301;**
wherein, the receiver module **207,** positioned at a receiver end of the fiber array unit **203,** comprising a photodetector array **305** configured to receive the plurality of optical signals from the fiber array unit **203** via an optical fiber connector **201** positioned at the second end of the fiber array unit **203,** and convert the plurality of optical signals into electrical signals;
a low-temperature co-fired ceramics substrate **309** at a base of the modular optical interconnect system **100,** soldered onto a multi-layer substrate **401,** providing a stable, thermally efficient foundation for integrating a plurality of optical and electronic components;
an optical interconnect unit **200,** integrated with the fiber array unit **203** or closely coupled with the modular optical interconnect, configured to handle a conversion of the plurality of electrical signals to the plurality of optical signals and reverse process; and
a modular heatsink **307** configured to extract heat from transmitting module **205** and receiving module **207,** integrated into the modular optical interconnect system **100** for heat dissipation during high-speed data transfer;
wherein, the first end of the fiber array unit **203** is connected to either the transmitter module **205** or receiving module **207** and second of the fiber array unit **203** connected to the optical fiber connector **201** and standard ferrules, the optical interconnect unit **200** is integrated with the modular optical interconnect system, converting the plurality of electrical signals to the plurality of optical signals and vice versa, for efficient signal conversion and transmission.

2. The system **100** as claimed in claim 1, wherein the transmitter module **205** and receiver module **207** are both positioned within the fiber array unit **203,** with the fiber connector **201** and standard 24-fiber MTP/MPO ferrules providing secure physical coupling and alignment for the transmission and reception of the plurality of optical signals between the transmitter module **205** and receiver module **207.**

3. The system **100** as claimed in claim 1, wherein the secondary lens **301** configured to couple a plurality of optical singles with fiber array unit **203** for transmitting module **205,** similarly in the receiver module **207,** the secondary leans **301** will collimate beam from fiber array unit **203,** which in-turn gets deflected to active area of the photodetector array **305.**

4. The system **100** as claimed in claim 1, wherein the fiber array unit **203** comprises 12 fibers dedicated to the transmitter module **205** and 12 fibers dedicated to the receiver module **207.,** thereby enabling high-density, high-performance optical communication.

5. The system **100** as claimed in claim 1, wherein the optical interconnect unit **200** handles the conversion of the plurality of electrical signals to the plurality of optical signals and the reverse process, includes a 12 channel laser diode and a 12-channel photodetector array.

6. The system **100** as claimed in claim 1, wherein the reflecting prism **300** is positioned within the fiber array unit **203,** deflecting the light from the transmitter module **205** at a 45-degree angle, guiding the collimated light into the fiber core with minimal loss, and achieving adjacent channel isolation better than 20 dB at 28 Gbps.

7. The system **100** as claimed in claim 1, wherein the modular optical interconnect system **100** is designed to support 12 optical channels, each capable of handling 28 Gbps, providing a total data rate of 336 Gbps with high optical coupling efficiency, less than 3 dB insertion loss, and configurable receiver output swing in the range of 320-800 mV adjustable via I²C.

8. The system **100** as claimed in claim 1, wherein the modular optical interconnect system **100** consumes ≤10 pJ/bit per channel and 275 mW per channel at 28 Gbps.

9. The system **100** as claimed in claim 1, wherein the modular optical interconnect system **100** provides an 18× reduction in PCB footprint and a 2.8× reduction in form factor.

10. The system **100** as claimed in claim 1, wherein the receiver module **207** comprises an independent Received Signal Strength Indicator (RSSI) and is configurable to adjust output swing size, apply pre-emphasis, and modify signal detection thresholds.
